(19) Europäisches Patentamt
European Patent Office
Office européen des brevets

(11) **EP 4 011 928 A1**

(12) **EUROPÄISCHE PATENTANMELDUNG**

(43) Veröffentlichungstag:
**15.06.2022   Patentblatt 2022/24**

(21) Anmeldenummer: 20212880.7

(22) Anmeldetag: **09.12.2020**

(51) Internationale Patentklassifikation (IPC):
*C08G 18/02* $^{(2006.01)}$    *C08G 18/32* $^{(2006.01)}$
*C08G 18/73* $^{(2006.01)}$    *C08G 18/78* $^{(2006.01)}$
*C08G 18/80* $^{(2006.01)}$

(52) Gemeinsame Patentklassifikation (CPC):
**C08G 18/73; C08G 18/022; C08G 18/3206;**
**C08G 18/7837; C08G 18/7843; C08G 18/8025**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **HERSTELLUNG VON ISOCYANATTERMINIERTEN, URETHANGRUPPENHALTIGEN PREPOLYMEREN**

(57) Die Erfindung betrifft ein Verfahren zur Herstellung von isocyanatterminierten, urethangruppenhaltigen Prepolymeren, umfassend eine Umsetzung einer Reaktionsmischung enthaltend einen stöchiometrischen Überschuss mindestens eines aliphatischen und/oder cycloaliphatischen Diisocyanats und eine Polyolzusammensetzung mit einer OH-Zahl > 400, dadurch gekennzeichnet, dass die Reaktionsmischung mit einem spezifischen Leistungseintrag im Bereich von 0,5 kW/m3 bis 40 kW/m$^3$, bezogen auf das Gesamtvolumen der Reaktionsmischung, gemischt wird.

**EP 4 011 928 A1**

**Beschreibung**

Die vorliegende Erfindung betrifft ein Verfahren zur Herstellung von isocyanatterminierten, urethangruppenhaltigen Prepolymeren. Des Weiteren betrifft die Erfindung die Verwendung der so hergestellten Prepolymere für die Herstellung von Isocyanurat- und Allophanatgruppen enthaltenden Polyisocyanaten mit einer mittleren Isocyanatfunktionalität $\geq$ 4 sowie ein Verfahren zur Herstellung solcher Polyisocyanate, die Polyisocyanate selbst und die Verwendung solcher Polyisocyanate zur Herstellung von elastischen Beschichtungen.

Modifizierungsreaktionen aliphatischer Diisocyanate sind seit langem bekannt. Die dabei erhaltenen Polyisocyanate finden als Vernetzerkomponente in Beschichtungssystemen und Klebstoffen Verwendung. Üblich sind einerseits Modifizierungsreaktionen, in denen die Isocyanate mit sich selbst reagieren und die beispielsweise zur Bildung von Biureten, Isocyanuraten, Uretdionen oder Iminooxadiazindionen führen. Andererseits können die Isocyanate unter Bildung von Urethan-, Allophanat und/oder Harnstoffgruppen mit Polyolen oder Polyaminen umgesetzt und so oligomerisiert werden. Entscheidend ist die Bildung von höhermolekularen Addukten, die einen niedrigeren Dampfdruck aufweisen als die monomeren Diisocyanate selbst. Nicht umgesetztes Diisocyanat wird aus dem Reaktionsgemisch beispielsweise durch Dünnschichtdestillation abgetrennt und es verbleibt das Polyisocyanat als Sumpfprodukt, welches, falls gewünscht, mit Lösungsmittel verdünnt werden kann.

In WO2019061019 werden Polyisocyanate beschrieben, die sich hervorragend zur Herstellung von 2-Komponenten-Systemen für elastische Beschichtungen, insbesondere sogenannte Soft-Touch-Beschichtungen eignen. Diese Polyisocyanate zeichnen sich unter anderem durch eine hohe Isocyanatfunktionalität, also eine hohe mittlere Anzahl von Isocyanat-Gruppen je Molekül aus und durch ein bestimmtes Verhältnis von Isocyanurat-Gruppen des Polyisocyanats zu Allophanat-Gruppen, wobei vorzugsweise auch Oligomere im Polyisocyanat enthalten sind, in denen Isocyanurat- und Allophanat-Gruppen chemisch miteinander verbunden, also im selben Molekül, vorliegen. Die Isocyanurat-Gruppen können dabei teilweise auch in der isomeren Form als Iminooxadiazindione vorliegen.

Ähnliche Polyisocyanate wurden auch in EP0496208A2 beschrieben. Hier wird beispielhaft im Labormaßstab zunächst eine Urethanisierungsreaktion eines (cyclo)aliphatischen Diisocyanats mit einem monofunktionellen Alkohol beschrieben und daran anschließend eine kombinierte Trimerisierung und Allophanatisierung. Die Funktionalität der entstehenden Polyisocyanate wird nicht genannt.

Jedoch können die nach den Verfahren des Standes der Technik hergestellten Produkte zu hohe Trübungswerte aufweisen, wodurch eine verlässliche Verwendung im optisch äußerst anspruchsvollen Bereich der Beschichtungssysteme und Lackierungen eingeschränkt wird. Auf diese Problematik und Möglichkeiten, diese zu lösen, wird im Stand der Technik nicht eingegangen.

Aufgabe der Erfindung war es nun, ein Verfahren bereitzustellen, mit dem sich insbesondere im technischen Maßstab trübungsfreie urethangruppen- und/oder allophanat- und isocyanuratgruppenhaltige Polyisocyanate herstellen lassen, die in Beschichtungssystemen, beispielsweise zur Herstellung von elastischen Beschichtungen verwendet werden können. Trübungsfreie Polyisocyanate sind vorliegend solche Polyisocyanate, die eine Trübung von höchstens 2,0 NTU, bestimmt per Nephelometrie gemäß DIN EN ISO 7027-1:2016-11 aufweisen.

Überraschenderweise wurde nun gefunden, dass die Trübung auf ungünstige Reaktionsbedingungen schon während der Urethanisierungsreaktion zurückzuführen ist.

Die Erfindung betrifft in einem ersten Aspekt ein Verfahren zur Herstellung von isocyanatterminierten, urethangruppenhaltigen Prepolymeren, umfassend eine Umsetzung einer Reaktionsmischung enthaltend einen stöchiometrischen Überschuss mindestens eines aliphatischen und/oder cycloaliphatischen Diisocyanats und eine Polyolzusammensetzung mit einer OH-Zahl > 400, wobei die Reaktionsmischung mit einem spezifischen Leistungseintrag im Bereich von 0,5 kW/m$^3$ bis 40 kW/m$^3$, bezogen auf das Gesamtvolumen der Reaktionsmischung, gemischt wird.

In einem zweiten Aspekt betrifft die vorliegende Erfindung ein Verfahren zur Herstellung von Isocyanurat- und Allophanatgruppen enthaltenden Polyisocyanaten mit einer mittleren Isocyanatfunktionalität $\geq$4, umfassend die Schritte

    (1) Herstellung eines isocyanatterminierten, urethangruppenhaltigen Prepolymers,

    (2) Umsetzung des in Schritt (1) erhaltenen Prepolymers in Gegenwart eines Katalysators unter Bildung von Isocyanurat- und Allophanatgruppen zu einem Polyisocyanat,

    (3) destillative Abtrennung von monomerem Diisocyanat aus dem in Schritt (2) erhaltenen Polyisocyanat, wobei die Schritte (1) und (2) in der genannten Reihenfolge hintereinander, teilweise gleichzeitig oder gleichzeitig erfolgen können,

dadurch gekennzeichnet, dass die Herstellung des isocyanatterminierten, urethangruppenhaltigen Prepolymers in Schritt (1) durch eine Umsetzung einer Reaktionsmischung enthaltend einen stöchiometrischen Überschuss mindestens eines aliphatischen und/oder cycloaliphatischen Diisocyanats und eine Polyolzusammensetzung mit einer OH-Zahl > 400 erfolgt, dadurch gekennzeichnet, dass die Reaktionsmischung mit einem spezifischen Leistungseintrag im Bereich von 0,5 kW/m$^3$ bis 40 kW/m$^3$, bezogen auf das Gesamtvolumen der Reaktionsmischung, gemischt wird.

In einem dritten Aspekt betrifft die vorliegende Erfindung ein Isocyanurat- und Allophanatgruppen enthaltendes Polyisocyanat mit einer mittleren Isocyanatfunktionalität ≥ 4 und einer mittels Nephelometrie gemäß DIN EN ISO 7027-1:2016-11 gemessenen Trübung von höchstens 2,0 NTU, bevorzugt höchstens 1,0 NTU und besonders bevorzugt höchstens 0,5 NTU.

Bevorzugt bedeuten erfindungsgemäß die Ausdrücke "umfassend" oder "enthaltend", "im Wesentlichen bestehend aus" und besonders bevorzugt "bestehend aus".

Vorliegend ist unter der mittleren OH-Funktionalität die durchschnittliche Anzahl von OH-Gruppen je Molekül zu verstehen. Sie kann berechnet werden, indem die Gesamtzahl aller OH-Gruppen der Polyole aus der die Polyol-Zusammensetzung besteht, durch die Anzahl der Moleküle in der Polyolzusammensetzung geteilt wird.

Analog ist unter der mittleren Isocyanatfunktionalität die durchschnittliche Anzahl von NCO-Gruppen je Molekül zu verstehen. Sie wird vorliegend nach folgender Formel bestimmt:

$$F_{(GPC)} = \frac{Mn_{(GPC)}}{100 \times 42 \over \%NCO_{(Titr.)}}$$

Hierbei wird der NCO-Gehalt in Gew.-% angegeben und titrimetrisch nach DIN EN ISO 11909:2007-05 bestimmt und das mittlere Molekulargewicht wird durch Gelpermeationschromatographie (GPC) nach DIN 55672-1:2016-03 unter Verwendung von Polystyrol als Standard und Tetrahydrofuran als Elutionsmittel bestimmt.

"Mindestens ein", wie hierin verwendet, bezieht sich auf 1 oder mehr, beispielsweise 2, 3, 4, 5, 6, 7, 8, 9 oder mehr. Im Zusammenhang mit Bestandteilen der hierin beschriebenen Verbindungen bezieht sich diese Angabe nicht auf die absolute Menge an Molekülen, sondern auf die Art des Bestandteils. "mindesten ein aliphatisches und/oder cycloaliphatisches Diisocyanat" bedeutet daher beispielsweise, dass nur eine Art von Diisocyanat oder mehrere verschiedene Arten von Diisocyanaten, ohne Angaben über die Menge der einzelnen Verbindungen zu machen, enthalten sein können.

Zahlenwerte, die hierin ohne Dezimalstellen angegeben sind, beziehen sich jeweils auf den vollen angegebenen Wert mit einer Dezimalstelle. So steht beispielsweise "99%" für "99,0%".

Numerische Bereiche, die in dem Format "in/von x bis y" angegeben sind, schließen die genannten Werte ein. Wenn mehrere bevorzugte numerische Bereiche in diesem Format angegeben sind, ist es selbstverständlich, dass alle Bereiche, die durch die Kombination der verschiedenen Endpunkte entstehen, ebenfalls erfasst werden.

Im Rahmen der vorliegenden Erfindung handelt es bei der Umsetzung der Reaktionsmischung um eine Urethanisierungsreaktion. Eventuell in geringem Maß ablaufende Nebenreaktionen sind hiermit nicht vollständig ausgeschlossen.

Vorliegend bezieht sich der Begriff "stöchiometrischer Überschuss" auf die am Schluss insgesamt hinzugefügten Mengen des mindestens einen aliphatischen und/oder cycloaliphatischen Diisocyanats und der Polyolzusammensetzung.

Geeignete aliphatische oder cycloaliphatische Diisocyanate für das erfindungsgemäße Verfahren sind beispielsweise ausgewählt aus der Gruppe bestehend aus 1,4-Diisocyanatobutan, 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 2,4- und 2,6-Diisocyanato-1-methylcyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 2,4'-Diisocyanatodicyclohexylmethan, 1-Isocyanato-1-methyl-4(3)-isocyanatomethylcyclohexan, Bis-(isocyanatomethyl)-norbornan und beliebigen Mischungen daraus.

Bevorzugt ist das aliphatische oder cycloaliphatische Diisocyanat ausgewählt aus der Gruppe bestehend aus 1,5-Diisocyanatopentan (PDI), 1,6-Diisocyanatohexan (HDI), 1-Isocyanato-3,3,5-trimethyl-5-isocyanatomethylcyclohexan (Isophorondiisocyanat, IPDI), 4,4'-Diisocyanatodicyclohexylmethan und beliebigen Mischungen daraus.

Besonders bevorzugt ist das aliphatische oder cycloaliphatische Diisocyanat ein lineares aliphatisches Diisocyanat ausgewählt aus der Gruppe bestehend aus 1,5-Diisocyanatopentan (PDI) und 1,6-Diisocyanatohexan (HDI).

Statt eines einzelnen Diisocyanats kann im erfindungsgemäßen Verfahren auch eine Mischung verschiedener Diisocyanate verwendet werden. Bevorzugt ist aber die Verwendung einer einzelnen Art von Diisocyanat.

Geeignete Polyolzusammensetzungen für das erfindungsgemäße Verfahren sind solche mit einer OH-Zahl > 400. Optional können die enthaltenen Alkohole weitere funktionelle, aber gegenüber Isocyanaten unreaktive Gruppen, wie beispielsweise Ethergruppen enthalten. Vorzugsweise ist die mittlere OH-Funktionalität der Polyolzusammensetzung ≥ 2 und ≤ 8, besonders bevorzugt ist die mittlere OH-Funktionalität der Polyolzusammensetzung ≥ 2 und ≤ 6, ganz besonders bevorzugt ist die mittlere OH-Funktionalität der Polyolzusammensetzung ≥ 3 und ≤ 5.

Bevorzugt enthält die Polyolzusammensetzung eines oder mehrere Mono- und/oder Polyole ausgewählt aus der Gruppe bestehend aus Methanol, Ethanol, *n*-Propanol, Isopropanol, n-butanol, Isobutanol, *tert*-Butanol, *n*-Pentanol, 2-Pentanol, 3-Pentanol, Neopentylalkohol, Isomere des Methyl-Butanols, Ethylenglycolmonomethylether, Ethylenglycolmonoethylether, Ethylenglycolmonopropylether, Ethylengylcolmonobutylether, Propylenglycolmonomethylether, Propylenglycolmonoethylether, Propylenglycolmonopropylether, Propylenglyoclmonobutylether, Furfurylalkohol, Trimethylolpropan, Pentaerythrit, Ethylenglycol, 1,2-Butandiol, 1,3-Butandiol, 1,4-Butandiol, 2,3-Butandiol, Diethylenglycol, 1,2-Propandiol, 1,3-Propandiol, Glycerin und Polyolen, die durch Alkoxylierung, vorzugsweise durch Ethoxylierung oder Propoxylierung dieser Polyole, besonders bevorzugt durch Ethoxylierung dieser Polyole erhältlich sind. Besonders bevorzugt enthält die Polyolzusammensetzung mindestens ein Polyol ausgewählt aus der Gruppe bestehend aus Trimethylolpropan, Ethylenglycol, 1,2-Propandiol, 1,3-Propandiol, 1,3-Butandiol, 1,4-Butandiol, Diethylenglycol und Glycerin. Ganz besonders bevorzugt enthält die Polyolzusammensetzung mindestens ein Polyol ausgewählt aus der Gruppe bestehend aus Trimethylolpropan, 1,3-Butandiol, 1,4-Butandiol und Diethylenglycol.

In einer bevorzugten Ausführungsform machen diese Mono- oder Polyole mindestens 95 Gew.-%, bevorzugt mindestens 99 Gew.-% und besonders bevorzugt mindestens 99,9 Gew.-% der Polyolzusammensetzung aus. Vorzugsweise enthält die Polyolzusammensetzung keine gegenüber Isocyanat unreaktiven Lösungsmittel.

In einer besonders bevorzugten Ausführungsform der Erfindung besteht die Polyolzusammensetzung aus Trimethylolpropan.

Das erfindungsgemäße Verfahren eignet sich bevorzugt für Umsetzungen zur Herstellung von Isocyanat-terminierten Prepolymeren im technischen Maßstab. Unter technischem Maßstab ist vorliegend eine Ansatzgröße von 10 kg bis 100000 kg je Ansatz, bevorzugt 100 kg bis 50000 kg je Ansatz, besonders bevorzugt 500 kg bis 30000 kg je Ansatz und ganz besonders bevorzugt 1000 kg bis 25000 kg je Ansatz zu verstehen, wobei sich Ansatzgröße auf die Gesamtmasse der Einsatzstoffe in der Reaktionsmischung bezieht.

Da die Dosierung und Förderung von Feststoffen im technischen Maßstab in der Regel schwierig und deshalb unerwünscht ist, ist es vorteilhaft, feste Polyolzusammensetzungen, wie beispielsweise das besonders bevorzugt zu verwendende Trimethylolpropan, vor der Zugabe in den Reaktor aufzuschmelzen. Auf diese Weise entfällt das Handling von Feststoffen. Dementsprechend wird in einer weiteren, bevorzugten Ausführungsform der Erfindung die Polyolzusammensetzung in flüssiger Form zum Isocyanat gegeben.

Die Urethanisierungsreaktion kann im Allgemeinen in jedem dem Fachmann als geeignet erscheinenden Reaktor durchgeführt werden.

Als Reaktor eignet sich beispielsweise ein Rührbehälter. Vorzugsweise handelt es sich um einen rotationssymmetrischen Rührbehälter mit vertikal stehender Hauptachse. Der Rührbehälter kann entlang dieser Hauptachse unterschiedliche Durchmesser aufweisen, ist jedoch bevorzugt im Wesentlichen zylindrisch. Boden und Deckel können beispielsweise als Klöpperboden oder auch flach ausgeführt sein. Zur Temperierung kann der Rührbehälter mit Wärmetauscher-Rohren, aufgeschweißten Halbrohrprofilen und/oder einem Doppelmantel versehen sein, wobei die Wärmetauscher-Rohre sowohl innen- als auch außenliegend ausgeführt sein können. Bevorzugt handelt es sich um einen bewehrten Rührbehälter, also einen Rührbehälter, der Stromstörer, vorzugsweise an der Behälterwand angebrachte Stromstörer, aufweist. Alternativ oder zusätzlich kann ein Teilstrom der Reaktionsmischung aus dem Reaktor entnommen und über einen extern angeordneten Wärmetauscher temperiert werden, bevor er dem Reaktor wieder zugeführt wird, um auf diese Weise die Temperatur im Reaktor zu kontrollieren. Stutzen für Zu- und Abläufe können an beliebigen Stellen an Wand, Deckel und Boden des Rührbehälters vorhanden sein.

Zur Durchführung der Urethanisierungsreaktion ist es vorteilhaft, den Reaktor zunächst mit Diisocyanat zu befüllen und auf eine Temperatur im Bereich von 60 °C und 140 °C, bevorzugt im Bereich von 70°C bis 130 °C und besonders bevorzugt im Bereich von 80 °C bis 120 °C zu erwärmen. Bevorzugt erfolgt die Urethanisierungsreaktion bei einer Reaktionstemperatur in diesem Bereich. Dann wird unter Durchmischung des Reaktorinhalts die Polyolzusammensetzung zugegeben. Im Falle einer bei Raumtemperatur festen Polyolzusammensetzung ist es, wie zuvor bereits erwähnt, vorteilhaft, diese in Form einer Schmelze zuzugeben, um die Anforderungen an die Apparate und Hilfsaggregate gering zu halten.

Um das erfindungswesentliche Merkmal zu erfüllen, dass die Reaktionsmischung mit einem spezifischen Leistungseintrag im Bereich von 0,5 kW/m$^3$ bis 40 kW/m$^3$, bezogen auf das Gesamtvolumen der Reaktionsmischung, gemischt wird, kann das Mischen auf unterschiedlichen Wegen erfolgen. So ist es beispielsweise möglich, einen Teilstrom aus dem Reaktor zu entnehmen und über eine Mischeinrichtung wieder zurück in den Reaktor zu fördern. Die Mischeinrichtung kann dabei beispielsweise ein Rotor-Stator-Mischer, eine Mischdüse, ein Statikmischer, ein Rührbehälter oder auch eine Pumpe, beispielsweise eine Kreiselpumpe sein. Bevorzugt erfolgt die Mischung und damit der Leistungseintrag direkt im Reaktionsbehälter mit Hilfe eines Rührwerks. Vorzugsweise handelt es sich bei dem Rührwerk um einen auf einer rotierenden Achse montierten Rührer, bevorzugt einen axial fördernden Rührer, der je nach H/D-Verhältnis (H=Höhe des Flüssigkeitsstands im Reaktor und D=Innendurchmesser des Reaktors) ein oder mehrstufig ausgeführt werden kann. Je höher das Verhältnis, desto mehr Rührstufen sind empfehlenswert.

Der spezifische Leistungseintrag durch das Mischen liegt dabei im Bereich von 0,5 kW/m$^3$ bis 40 kW/m$^3$, vorzugsweise im Bereich von 0,7 kW/m$^3$ bis 10 kW/m$^3$ und besonders bevorzugt im Bereich von 1 kW/m$^3$ bis 5 kW/m$^3$, jeweils bezogen auf das gesamte Volumen der Reaktionsmischung. Bei Anwendung von spezifischen Leistungseinträgen unterhalb des erfindungsgemäßen Bereichs wurde beobachtet, dass sich unlösliche Feststoffpartikel bilden, die zu einer Trübung der Reaktionsmischung und der daraus hergestellten Produkte führen. Höhere spezifische Leistungseinträge bringen einerseits keinen weiteren Vorteil und führen gerade im technischen Maßstab aufgrund der Viskosität der Reaktionsmischung zum Auftreten hoher Kräfte, für die die entsprechenden Apparate ausgelegt werden müssten. Die Problematik der Trübungen tritt besonders stark auf, wenn die dynamische Viskosität der Polyol-Zusammensetzung bei Reaktionstemperatur mindestens 4 mal, bevorzugt mindestens 6 mal, besonders bevorzugt mindestens 8 mal so groß ist, wie die des Diisocyanats.

Der stöchiometrische Überschuss wird vorzugsweise so gewählt, dass sich ein Äquivalentverhältnis des insgesamt vorliegenden, mindestens einen aliphatischen und/oder cycloaliphatischen Diisocyanats zur Polyolzusammensetzung im Bereich von 4:1 bis 200:1, bevorzugt im Bereich von 5:1 bis 50:1 ergibt.

Ein weiterer Gegenstand der Erfindung ist die Verwendung des nach dem erfindungsgemäßen Verfahren hergestellten isocyanatterminierten, urethangruppenhaltigen Prepolymers zur Herstellung von Isocyanurat- und Allophanatgruppen enthaltenden Polyisocyanaten mit einer mittleren Isocyanatfunktionalität ≥4. Auch die Verwendung von spezifischen Leistungseinträgen von 0,5 kW/m$^3$ bis 40 kW/m$^3$, vorzugsweise im Bereich von 0,7 kW/m$^3$ bis 10 kW/m$^3$ und besonders bevorzugt im Bereich von 1 kW/m$^3$ bis 5 kW/m$^3$, jeweils bezogen auf das gesamte Volumen der Reaktionsmischung, bei Urethanisierungsreaktionen in einer Ansatzgröße von 10 kg bis 100000 kg je Ansatz, bevorzugt 100 kg bis 50000 kg je Ansatz, besonders bevorzugt 500 kg bis 30000 kg je Ansatz und ganz besonders bevorzugt 1000 kg bis 25000 kg je Ansatz, wobei sich Ansatzgröße auf die Gesamtmasse der Einsatzstoffe in der Urethanisierungsreaktion bezieht, ist ein weiterer Gegenstand der Erfindung.

Ein weiterer Gegenstand der Erfindung ist ein Verfahren zur Herstellung von Isocyanurat- und Allophanatgruppen enthaltenden Polyisocyanaten mit einer mittleren Isocyanatfunktionalität ≥4, umfassend die Schritte

(1) Herstellung eines isocyanatterminierten, urethangruppenhaltigen Prepolymers
(2) Umsetzung des in Schritt (1) erhaltenen Prepolymers in Gegenwart eines Katalysators unter Bildung von Isocyanurat- und Allophanatgruppen zu einem Polyisocyanat

(3) Abtrennung von monomerem Diisocyanat aus dem in Schritt (2) erhaltenen Polyisocyanat, wobei die Schritte (1) und (2) in der genannten Reihenfolge hintereinander, teilweise gleichzeitig oder gleichzeitig erfolgen können,

dadurch gekennzeichnet, dass die Herstellung des isocyanatterminierten, urethangruppenhaltigen Prepolymers in Schritt (1) wie zuvor beschrieben erfolgt.

Geeignete Katalysatoren für die Umsetzung in Schritt (2) sind beispielsweise die in WO2019061019A1 auf Seite 11, Zeile 13 bis Seite 13, Zeile 11 genannten Katalysatoren. Sie werden entweder als solche oder gelöst in einem geeigneten organischen Lösungsmittel zugegeben, um die Bildung der Isocyanurat- und Allophanatgruppen zu beschleunigen. Bevorzugte Katalysator-Lösungsmittel sind solche, die gegenüber Isocyanaten reaktive Gruppen aufweisen und entsprechend in das Polymer eingebaut werden können. Dies sind beispielsweise ein- oder mehrwertige Alkohole wie Methanol, Ethanol, *n*-Propanol, Isopropanol, n-Butanol, n-Hexanol, 2-Ethyl-1-hexanol, Ethylenglycol, Propylenglycol, Isomere des Butandiols, 2-Ethyl-1,3-hexandiol, Glycerin, Etheralkohole wie 1-Methoxy-2-propanol, 3-Ethyl-3-hydroxymethyloxetan, Tetrahydrofurfurylalkohol, Ethylenglycolmonomethylether, Ethylenglycolmonobutylether, Dietyhlenglycolmonomethylether, Dietyhlenglycolmonoethylether, Dietyhlenglycolmonobutylether, Diethylenglycol, Dipropylenglycol, Polyethylenglycole, Polypropylenglycole, gemischte Polyethylen-/Polypropylenglycole sowie deren Monoalkylether, Esteralkohole wie Ethylenglycolmonoacetat, Propylenglycolmonolaurat, Glycerindiacetat, Glycerinmonobutyrat oder 2,2,4-Trimethyl-1,3-pentandiolmonoisobutyrat, ungesättigte Alkohole wie Allylalkohol, 1,1-Dimethylallylalkohol oder Oleylalkohol, araliphatische Alkohole wie Benzylalkohol oder monosubstituierte Amide wie N-Methylformamid, N-Methylacetamid, Cyanoacetamid oder 2-Pyorrolidinon oder Mischungen solcher Lösungsmittel.

Die Umsetzung in Schritt (2) erfolgt vorzugsweise unter Inertgasatmosphäre bei einer Temperatur im Bereich von 0 °C bis 150 °C, bevorzugt im Bereich zwischen 20 °C und 130 °C und besonders bevorzugt zwischen 40 °C und 120 °C. Während Urethanisierungsreaktion zur Bildung des Prepolymers in Schritt (1) unter diesen Bedingungen in der Regel spontan abläuft, erfolgt die Umsetzung unter Bildung von Isocyanurat- und Allophanatgruppen im Wesentlichen erst nach Zugabe eines entsprechenden Katalysators.

Nachdem der gewünschte Umsetzungsgrad erreicht ist, wird die Umsetzung gestoppt. Dies kann beispielsweise durch Abkühlen der Rekationsmischung erfolgen. Vorzugsweise erfolgt das Abstoppen durch Zugabe eines Katalysator-Gifts und optional einer anschließenden Erwärmung der Reaktionsmischung auf eine Temperatur oberhalb von 80 °C.

Geeignete Katalysatorgifte (Stopper) sind dem Fachmann bekannt. Es handelt sich dabei beispielsweise um Salzsäure, Phosphorsäure, Phosphonsäure, Carbonsäurechloride wie Acetylchlorid, Benzoylchlorid oder Isophthaloyldichlorid, Sulfonsäuren oder Sulfonsäureester, wie beispielsweise Methansulfonsäureester, p-Toluolsulfonsäure, Trifluormethansulfonsläure, Perfluorbutansulfonsäure, Dodecylbenzolsulfonsäure, p-Toluolsulfonsäuremethylester, p-Toluolsulfonsäureetyhlester, Mono- oder Dialkylphosphate wie beispielsweise Tridecylphosphat, Dibutylphosphat, Dioctylphosphat, oder auch silylierte Säuren wie beispielsweise Methansulfonsäure-trimethylsilylester, Trifluormethansulfonsäure-trimethylsilylester, Tris(trimethylsilyl)phosphat oder Diethyl(trimethylsily)phosphat.

Die zum Abstoppen der Reaktion benötigte Menge des Katalysatorgifts hängt wesentlich von der eingesetzten Menge des Katalysators ab. Grundsätzlich ist eine äquivalente Menge des Stoppers erforderlich, aber da üblicherweise ein Teil des Katalysators anderweitig desaktiviert wird, kann auch eine geringere Menge an Stopper ausreichend sein.

Auch das Katalysatorgift kann als solches oder in Lösung zugegeben werden, wobei sich als Lösungsmittel beispielsweise die zuvor aufgelisteten Katalysator-Lösungsmittel eignen. Neben diesen Lösungsmitteln können auch die Ausgangsisocyanate als Lösungsmittel für die Katalysatorgifte verwendet werden.

Nachdem die Reaktion beendet wurde, erfolgt eine Abtrennung von monomerem Diisocyanat aus dem Reaktionsprodukt. Diese erfolgt vorzugsweise destillativ, beispielsweise bei einem Druck unterhalb von 5 mbar, bevorzugt unterhalb von 1 mbar und besonders bevorzugt unterhalb von 0.5 mbar und beispielsweise bei einer Temperatur im Bereich von 100 bis 200 °C, vorzugsweise im Bereich von 120 bis 180 °C. Der Restgehalt an monomerem Diisocyanat nach der Destillation beträgt vorzugsweise ≤0,50 Gew.-%, besonders bevorzugt ≤0,3 Gew.-% und besonders bevorzugt ≤0,2 Gew.-%.

Solche, mit dem erfindungsgemäßen Verfahren erhältlichen oder hergestellten Isocyanurat- und Allophanatgruppen enthaltende Polyisocyanate mit einer mittleren Isocyanatfunktionalität ≥4 sind ein weiterer Gegenstand der Erfindung.

Die erfindungsgemäßen Isocyanurat- und Allophanatgruppen enthaltenden Polyisocyanate weisen eine mittels Nephelometrie gemäß DIN EN ISO 7027-1:2016-11 gemessene Trübung von höchstens 2,0 NTU, bevorzugt höchstens 1,0 NTU und besonders bevorzugt höchstens 0,5 NTU auf. Vorzugsweise liegt der NCO-Gehalt dieser Polyisocyanate bei 15 Gew.-% bis 25 Gew.-% gemessen per Titration gemäß DIN EN ISO 11909:2007-05. Ebenfalls bevorzugt ist, dass der Restgehalt an monomerem Diisocyanat ≤0,50 Gew.-%, besonders bevorzugt ≤0,3 Gew.-% und besonders bevorzugt ≤0,2 Gew.-%, gemessen nach DIN EN ISO 10283:2007-11 gaschromatographisch mit internem Standard.

Bei Bedarf kann auch ein Lösemittel verwendet werden, um die Viskosität des erfindungsgemäßen Isocyanurat- und Allophanatgruppen enthaltenden Polyisocyanats herabzusetzen. Geeignete Lösemittel sind beispielsweise solche, die als Lacklösemittel bekannt sind, wie zum Beispiel Ethylacetat, Butylacetat, Ethylenglykolmonoethyletheracetat, 1-Methoxy-2-propylacetat, 3-Methoxy-n-butylacetat, Aceton, 2-Butanon, 4-Methyl-2-pentanon, Cyclohexanon, Toluol, Xylol, Chlorbenzol, Waschbenzin, Solvent Naphtha, Kohlensäureester wie beispielsweise Dimethylcarbonat, Diethylcarbonat, 1,2-Ethylencarbonat, 1,2-Propylencarbonat, Lactone wie β-Propiolacton, γ-Butyrolacton, ε-Caprolacton oder ε-Methyhcaprolacton, aber auch Lösungsmittel wie beispielsweise Propylenglycoldiacetat, Dietyhlenglycoldimethylether, Dipropylenglycoldimethylether, Diethylenglycolmonoethyletheracetat, Diethylenglycolmonobutylehteracetat, N-Methylpyrrolidon oder N-Methylcaprolactam. Es können auch beliebige Mischungen der vorstehend beispielhaft genannten Lösemittel verwendet.

Die erfindungsgemäßen Isocyanurat- und Allophanatgruppen enthaltenden Polyisocyanate eignen sich insbesondere für die Verwendung in einem Zwei-Komponenten-System, das ein weiterer Gegenstand der Erfindung ist.

Das erfindungsgemäße Zwei-Komponenten-System, enthält eine Komponente A), umfassend mindestens eine NCO-reaktive Verbindung, und eine Komponente B), umfassend mindestens ein erfindungsgemäßes Isocyanurat- und Allophanatgruppen enthaltendes Polyisocyanat. Bevorzugt ist die mindestens eine NCO-reaktive Verbindung ein Polyol, besonders bevorzugt mindestens ein Polyol mit einer Hydroxyl-Funktionalität zwischen ≥2 und ≤5. Daneben können weitere Polyole sowie Additive, wie zum Beispiel Entschäumer, Mattierungsmittel, Katalysatoren, Stabilisatoren, Antioxidantien, Biozide, Füllstoffe, Farbpigmente, anorganische oder organische Pigmente, Verlaufshilfsmittel, Lichtschutzmittel, Dispergiermittel, Verdicker, Haftmittel, Inhibitoren, Katalysatoren, Emulgatoren und/oder andere Hilfsstoffe enthalten sein, wobei diese optionalen Verbindungen in der Komponente A) und/oder in der Komponente B) enthalten sein können.

Bei Bedarf kann auch ein Lösemittel verwendet werden, um die Viskosität des Polyols bzw. des gemischten Zwei-Komponenten-Systems herabzusetzen. Geeignete Lösemittel sind beispielsweise solche, die als Lacklösemittel bekannt sind, wie zum Beispiel Ethylacetat, Butylacetat, Ethylenglykolmonoethyletheracetat, 1-Methoxy-2-propylacetat, 3-Methoxy-n-butylacetat, Aceton, 2-Butanon, 4-Methyl-2-pentanon, Cyclohexanon, Toluol, Xylol, Chlorbenzol, Waschbenzin, Solvent Naphtha, Kohlensäureester wie beispielsweise Dimethylcarbonat, Diethylcarbonat, 1,2-Ethylencarbonat, 1,2-Propylencarbonat, Lactone wie β-Propiolacton, γ-Butyrolacton, ε-Caprolacton oder ε-Metyhlcaprolacton, aber auch Lösungsmittel wie beispielsweise Propylenglycoldiacetat, Dietyhlenglycoldimethylether, Dipropylenglycoldimethylether, Diethylenglycolmonoethyletheracetat, Diethylenglycolmonobutylehteracetat, N-Methylpyrrolidon, N-Methylcaprolactam oder Wasser.

Das erfindungsgemäße Zwei-Komponenten-System kann vorzugsweise verwendet werden, um Substrate zu beschichten. Daher ist ein weiterer Gegenstand der vorliegenden Erfindung eine Beschichtung, erhältlich oder hergestellt durch Umsetzung des erfindungsgemäßen Zwei-Komponenten-Systems oder durch Umsetzung des erfindungsgemäßen Isocyanurat- und Allophanatgruppen enthaltenden Polyisocyanats mit einer gegenüber Isocyanatgruppen reaktiven Komponente, wobei die jeweilige Umsetzung unter Wärmeeinwirkung und/oder aktinischer Strahlung und/oder in Gegenwart eines oder mehrerer Katalysatoren erfolgt. Vorzugsweise ist die Beschichtung eine elastische Beschichtung.

Dazu wird das Zwei-Komponenten-Beschichtungssystem vorzugsweise auf das gegebenenfalls vorbehandelte, beispielsweise grundierte, Substrat aufgebracht und beispielsweise durch Erhitzen ausgehärtet. Der Verbund aus einem Substrat und der erfindungsgemäßen Beschichtung, vorzugsweise der erfindungsgemäßen elastischen Beschichtung ist ein weiterer Gegenstand der vorliegenden Erfindung.

### Beispiele

Alle Prozentangaben beziehen sich, soweit nichts Anderslautendes vermerkt ist, auf das Gewicht.

Die Bestimmung der NCO-Gehalte erfolgte titrimetrisch nach DIN EN ISO 11909:2007-05.

Die Rest-Monomeren Gehalte wurden nach DIN EN ISO 10283:2007-11 gaschromatographisch mit internem Standard gemessen.

Die Trübung wurde bestimmt per Nephelometrie gemäß DIN EN ISO 7027-1:2016-11.

### Vergleichsbeispiel 1

In einem 3 m³ Rührreaktor, ausgestattet mit einem Mehrstufen-Impuls-Gegenstrom-Rührer (MIG-Rührer) wurden unter Stickstoffatmosphäre 1500 kg Hexamethylendiisocyanat (HDI) vorgelegt und auf 105 °C temperiert. Bei dieser Temperatur wurden unter Rühren 150 kg einer Schmelze von Trimethylolpropan zugegeben. Der spezifische Leistungseintrag betrug 0,25 kW/m³ bezogen auf das Gesamtvolumen der Reaktionsmischung. Etwa 2 Stunden nach Beendigung der Zugabe war die Urethanisierungsreaktion beendet und die Reaktortemperatur wurde auf 95 °C abgesenkt. Es wurde eine Probe des erhaltenen Prepolymers gezogen und einer visuellen Prüfung unterzogen. Diese ergab eine deutlich sichtbare Trübung durch Schwebstoffe. Anschließend wurde durch Zugabe einer 0,5%-igen Trimethylbenzylammoniumhydroxid-Lösung in 2-Ethylhexanol die Trimerisierungs- und Allophanatisierungsreaktion gestartet. Beim Erreichen eines NCO-Werts von 36% wurde die Reaktion beendet, indem eine Stopperlösung (10% Dibutylphosphat in HDI) in einem Gewichtsverhältnis von 100 Teilen Katalysatorlösung zu 3 Teilen Stopperlösung zugegeben wurden. Es wurde noch weitere 30 Minuten bei 95 °C gerührt und anschließend das verbliebene monomere HDI in einem Kurzwegverdampfer bei 140 °C und 0,1 mbar abgetrennt. Das direkt erhaltene Verfahrensprodukt wies eine Trübung von 2,6 NTU, einen NCO-Gehalt von 19,5% und einen Restmonomerengehalt von 0,09% auf. Auch durch Verdünnung mit Butylacetat auf 80 Gew.-% Polyisocyanat-Anteil im verdünnten Produkt konnte keine Verringerung der Trübung festgestellt werden.

### Beispiel 1

Vergleichsbeispiel 1 wurde wiederholt, mit dem Unterschied, dass die Rührerdrehzahl erhöht wurde, so dass mit einem spezifischen Leistungseintrag von 2,2 kW/m³, bezogen auf das Gesamtvolumen der Reaktionsmischung, gearbeitet wurde. Das direkt erhaltene Verfahrensprodukt wies eine Trübung von 0,29 NTU, einen NCO-Gehalt von 19,3% und einen Restmonomerengehalt von 0,17% auf. Auch für das mit Butylacetat auf 80 Gew.-% Polyisocyanat-Anteil verdünnte Produkt konnte keine stärkere Trübung festgestellt werden.

### Beispiel 2

Beispiel 1 wurde wiederholt, mit dem Unterschied, dass die Rührerdrehzahl reduziert wurde, so dass mit einem spezifischen Leistungseintrag von 0,8 kW/m³, bezogen auf das Gesamtvolumen der Reaktionsmischung, gearbeitet wurde. Das direkt erhaltene Verfahrensprodukt wies eine Trübung von 0,45 NTU, einen NCO-Gehalt von 19,5% und einen Restmonomerengehalt von 0,20% auf. Auch für das mit Butylacetat auf 80 Gew.-% Polyisocyanat-Anteil verdünnte Produkt konnte keine stärkere Trübung festgestellt werden.

### Patentansprüche

1. Verfahren zur Herstellung von isocyanatterminierten, urethangruppenhaltigen Prepolymeren, umfassend eine Umsetzung einer Reaktionsmischung enthaltend einen stöchiometrischen Überschuss mindestens eines aliphatischen und/oder cycloaliphatischen Diisocyanats und eine Polyolzusammensetzung mit einer OH-Zahl > 400, wobei die Reaktionsmischung mit einem spezifischen Leistungseintrag im Bereich von 0,5 kW/m³ bis 40 kW/m³, bezogen auf das Gesamtvolumen der Reaktionsmischung, gemischt wird.

2. Verfahren gemäß Anspruch 1, **dadurch gekennzeichnet, dass** das mindestens eine aliphatische und/oder cycloaliphatische Diisocyanat ausgewählt ist aus der Gruppe bestehend aus 1,4-Diisocyanatobutan, 1,5-Diisocyanatopentan, 1,6-Diisocyanatohexan, 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 2,4- und 2,6-Diisocyanato-1-methylcyclohexan, 1,3- und 1,4-Bis-(isocyanatomethyl)-cyclohexan, 1-Isocyanato-3,3,5-trimethyl-5-isocyanatomethylcyclohexan, 4,4'-Diisocyanatodicyclohexylmethan, 2,4'-Diisocyanatodicyclohexylmethan, 1-Isocyanato-1-methyl-4(3)-isocyanatomethylcyclohexan, Bis-(isocyanatomethyl)-norbornan und beliebigen Mischungen daraus.

3. Verfahren gemäß Anspruch 1 oder 2, **dadurch gekennzeichnet, dass** die Polyolzusammensetzung eine mittlere OH-Funktionalität ≥ 2 und ≤ 8, bevorzugt ≥ 2 und ≤ 6 und besonders bevorzugt ≥ 3 und ≤ 5 aufweist.

4. Verfahren gemäß einem der Ansprüche 1 bis 3, **dadurch gekennzeichnet, dass** die Polyolzusammensetzung mindestens ein Polyol ausgewählt aus der Gruppe bestehend aus Trimethylolpropan, Ethylenglycol, 1,2-Propandiol, 1,3-Propandiol, 1,3-Butandiol, 1,4-Butandiol, Diethylenglycol und Glycerin und bevorzugt mindestens ein Polyol ausgewählt aus der Gruppe bestehend aus Trimethylolpropan, 1,3-Butandiol, 1,4-Butandiol und Diethylenglycol enthält.

5. Verfahren gemäß einem der Ansprüche 1 bis 4, **dadurch gekennzeichnet, dass** die Umsetzung in einer Ansatzgröße von 10 kg bis 100000 kg je Ansatz, bevorzugt 100 kg bis 50000 kg je Ansatz, besonders bevorzugt 500 kg bis 30000 kg je Ansatz und ganz besonders bevorzugt 1000 kg bis 25000 kg je Ansatz durchgeführt wird, wobei sich Ansatzgröße auf die Gesamtmasse der Einsatzstoffe in der Reaktionsmischung bezieht.

6. Verfahren gemäß einem der Ansprüche 1 bis 5, **dadurch gekennzeichnet, dass** die Umsetzung in einem Rührbehälter durchgeführt wird und der spezifische Leistungseintrag durch Mischen mit einem Rührwerk, bevorzugt durch Mischen mit einem axial fördernden Rührer, erfolgt.

7. Verfahren gemäß einem der Ansprüche 1 bis 6, **dadurch gekennzeichnet, dass** der stöchiometrische Überschuss so gewählt wird, dass ein Äquivalentverhältnis des insgesamt vorliegenden, mindestens einen aliphatischen und/oder cycloaliphatischen Diisocyanats zu der Polyolzusammensetzung im Bereich von 4:1 bis 200:1, bevorzugt im Bereich von 5:1 bis 50:1 vorliegt.

8. Verfahren gemäß einem der Ansprüche 1 bis 7, **dadurch gekennzeichnet, dass** die Umsetzung der Reaktionsmischung bei einer Reaktionstemperatur im Bereich von 60 bis 140 °C, bevorzugt im Bereich von 70 °C bis 130 °C und besonders bevorzugt im Bereich von 80 °C bis 120 °C erfolgt.

9. Verwendung eines nach einem der Ansprüche 1 bis 8 hergestellten isocyanatterminierten, urethangruppenhaltigen Prepolymers zur Herstellung von Isocyanurat- und Allophanatgruppen enthaltenden Polyisocyanaten mit einer mittleren Isocyanatfunktionalität ≥4.

10. Verfahren zur Herstellung von Isocyanurat- und Allophanatgruppen enthaltenden Polyisocyanaten mit einer mittleren Isocyanatfunktionalität ≥4, umfassend die Schritte

 (1) Herstellung eines isocyanatterminierten, urethangruppenhaltigen Prepolymers,
 (2) Umsetzung des in Schritt (1) erhaltenen Prepolymers in Gegenwart eines Katalysators unter Bildung von Isocyanurat- und Allophanatgruppen zu einem Polyisocyanat,
 (3) destillative Abtrennung von monomerem Diisocyanat aus dem in Schritt (2) erhaltenen Polyisocyanat, wobei die Schritte (1) und (2) in der genannten Reihenfolge hintereinander, teilweise gleichzeitig oder gleichzeitig erfolgen können,

**dadurch gekennzeichnet, dass** die Herstellung des isocyanatterminierten, urethangruppenhaltigen Prepolymers in Schritt (1) gemäß einem der Ansprüche 1 bis 8 erfolgt.

11. Isocyanurat- und Allophanatgruppen enthaltendes Polyisocyanat mit einer mittleren Isocyanatfunktionalität ≥4 und einer mittels Nephelometrie gemäß DIN EN ISO 7027-1:2016-11 gemessenen Trübung von höchstens 2,0 NTU, bevorzugt höchstens 1,0 NTU und besonders bevorzugt höchstens 0,5 NTU.

12. Verwendung eines gemäß Anspruch 10 hergestellten Polyisocyanats in einem Zwei-Komponenten-System.

13. Zwei-Komponenten-System, enthaltend eine Komponente A), umfassend mindestens eine NCO-reaktive Verbindung, und eine Komponente B), umfassend mindestens ein Polyisocyanat gemäß Anspruch 11.

14. Beschichtung, erhältlich oder hergestellt durch Umsetzung eines Zwei-Komponenten-Systems gemäß Anspruch 13 oder durch Umsetzung eines Isocyanurat- und Allophanatgruppen enthaltenden Polyisocyanats gemäß Anspruch 11 mit einer gegenüber Isocyanatgruppen reaktiven Komponente, wobei die jeweilige Umsetzung unter Wärmeeinwirkung und/oder aktinischer Strahlung und/oder in Gegenwart eines oder mehrerer Katalysatoren erfolgt.

15. Verbund aus einem Substrat und einer Beschichtung gemäß Anspruch 14.

**Europäisches Patentamt**
**European Patent Office**
**Office européen des brevets**

## EUROPÄISCHER RECHERCHENBERICHT

**Nummer der Anmeldung**

EP 20 21 2880

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | WO 2019/061019 A1 (COVESTRO DEUTSCHLAND AG [DE]; LIU QINGLAN [CN]) 4. April 2019 (2019-04-04) | 11 | INV. C08G18/02 C08G18/32 |
| A | * Absatz [0136] * | 1-10, 12-15 | C08G18/73 C08G18/78 C08G18/80 |
| | ----- | | |

**RECHERCHIERTE SACHGEBIETE (IPC)**

C08G

Der vorliegende Recherchenbericht wurde für alle Patentansprüche erstellt

| Recherchenort | Abschlußdatum der Recherche | Prüfer |
|---|---|---|
| München | 10. Mai 2021 | Bergmeier, Martin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 21 2880

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-05-2021

| Im Recherchenbericht angeführtes Patentdokument | Datum der Veröffentlichung | Mitglied(er) der Patentfamilie | Datum der Veröffentlichung |
|---|---|---|---|
| WO 2019061019 A1 | 04-04-2019 | CN 111094373 A<br>EP 3688050 A1<br>US 2020270390 A1<br>WO 2019061019 A1<br>WO 2019062383 A1 | 01-05-2020<br>05-08-2020<br>27-08-2020<br>04-04-2019<br>04-04-2019 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2019061019 A
- EP 0496208 A2
- WO 2019061019 A1